(19) Europäisches Patentamt
European Patent Office
Office européen des brevets

(11) Publication number: 0 111 849
A1

# (12) EUROPEAN PATENT APPLICATION

(21) Application number: 83112402.9

(22) Date of filing: 09.12.83

(51) Int. Cl.$^3$: C 08 G 63/64

(30) Priority: 22.12.82 US 452120

(43) Date of publication of application: 27.06.84 Bulletin 84/26

(84) Designated Contracting States: DE FR GB IT NL

(71) Applicant: GENERAL ELECTRIC COMPANY
1 River Road
Schenectady New York 12305(US)

(72) Inventor: Hilakos, William
R.R. No. 1
Mt. Vernon Indiana 47620(US)

(72) Inventor: Quinn, Clayton Byerley
82 Park Ridge Drive
Mt. Vernon Indiana 47620(US)

(74) Representative: Catherine, Alain et al,
GETSCO 42, avenue Montaigne
F-75008 Paris(FR)

## (54) Branched copolyester-carbonate resins.

(57) Thermoplastic randomly branched copolyester-carbonate resin compositions are provided which are particularly suited for blow molding operations. These branched copolyester-carbonate compositions are obtained by reacting a carbonate precursor, at least one dihydric phenol, at least one difunctional carboxylic acid or a reactive derivative thereof, and a polyfunctional organic branching agent.

EP 0 111 849 A1

Croydon Printing Company Ltd.

BRANCHED COPOLYESTER-CARBONATE RESINS

Copolyester-carbonate resins are well known thermoplastic materials which, due to their many excellent properties, are finding increasing use as thermoplastic engineering materials in many commerical and industrial applications. These polymers have outstanding mechanical, thermal and optical properties such as high tensile strength, optical clarity, thermal and dimensional stability and impact strength. The copolyester-carbonates are typically prepared by reacting (i) a carbonate precursor, (ii) a difunctional carboxylic acid, and (iii) a dihydric phenol to provide a linear polymer consisting of units of the dihydric phenol linked to one another through carbonate and ester linkages.

These copolyester-carbonates differ from most thermoplastic polymers in their melt rheology behavior. Most thermoplastic polymers exhibit non-Newtonian flow characteristics over essentially all melt processing conditions. Newtonian flow is defined as the type of flow occurring in a liquid system where the rate of shear is directly proportional to the shearing force. However, in contrast to most thermoplastic polymers, copolyester-carbonates prepared from dihydric phenols exhibit substantially Newtonian flow at normal pro-

processing temperatures and shear rates.

Two other characteristics of molten thermoplastic polymers are considered to be significant for molding operations: melt elasticity and melt strength. Melt elasticity is the recovery of the elastic energy stored within the melt from distortion or orientation of the molecules by shearing stresses. Melt strength may be simply described as the tenacity of a molten strand and indicates the ability of the melt to support a stress. Both of these characteristics are important in extrusion blow molding, particularly in fabrication by extrusion blow molding. Non-Newtonian flow characteristics tend to impart melt elasticity and melt strength to polymers thus allowing their use in blow molding fabrication. In the usual blow molding operation, a tube of molten thermoplastic is extruded vertically downward into a mold, followed by the introduction of a gas, such as air, into the tube thus forcing the molten plastic to conform to the shape of the mold. The length of the tube and the quantity of material forming the tube are limiting factors in determining the size and wall thickness of the objects that can be molded by this process. The fluidity of the melt obtained from conventional copolyester-carbonates such as those derived from bisphenol-A, or the lack of melt strength as well as the paucity of extrudate swelling, serve to limit blow molding applications to relatively small, thin walled parts. Temperatures must generally be carefully controlled to prevent the extruded tube

from falling away before it attains the desired length and the mold is closed around it for blowing. Consequently, the Newtonian behavior of linear conventional copolyester-carbonate resin melts has severely restricted their use in the production of large hollow bodies by conventional extrusion blow molding operations as well as the production of various other shapes by profile extrusion methods.

There thus exists a need for copolyester-carbonate resins which lend themselves to blow molding operations. It is an object of the instant invention to provide such copolyester-carbonate resins.

BRIEF SUMMARY OF THE INVENTION

In accordance with the instant invention there are provided novel thermoplastic randomly branched copolyester-carbonate resins. These randomly branched copolyester-carbonates are prepeared by reacting (i) a carbonate precursor, (ii) at least one difunctional carboxylic acid or a reactive derivative thereof, (iii) at least one dihydric phenol, and (iv) a minor amount of a polyfunctional organic compound. These randomly branched copolyester-carbonates exhibit excellent heat resistance and high melt strength which makes them suitable for the fabrication of blow molded articles. These randomly branched thermoplastic copolyester-carbonate resin also exhibit unique properties of non-Newtonian flow and melt elasticity which, combined with their melt strength and heat resistance, makes them uniquely suited for use as blow molding grade resins.

## DESCRIPTION OF THE INVENTION

The instant invention is directed to novel thermoplastic randomly branched copolyester-carbonate resins. More particularly, the instant invention provides randomly branched copolyester-carbonate resins useful as blow molding grade resins.

The thermoplastic randomly branched copolyester-carbonate resins of the instant invention are produced by the reaction of (i) a carbonate precursor, (ii) at least one difunctional carboxylic acid or a reactive derivative thereof, (iii) at least one dihydric phenol, and (iv) a minor amount of a polyfunctional organic compound.

Briefly stated, the copolyester-carbonates of this invention comprise recurring carbonate groups

$$(-O-\overset{\overset{O}{\|}}{C}-O-)$$

carboxylate groups

$$(-\overset{\overset{O}{\|}}{C}-O-)$$

and aromatic carbocyclic groups in the randomly branched polymer in which at least some of the carboxylate groups and at least some of the carbonate groups are bonded directly to the ring carbon atoms of the aromatic carbocyclic groups.

These copolyester-carbonate polymers contain ester bonds and carbonate bonds in the polymer, wherein the amount of the ester bonds is in the range of from about 25 to about 90 mole percent, and preferably in the range of from about 35 to about 80 mole percent, relative to the carbonate bonds.

The copolyester-carbonate resins of the instant invention exhibit properties of non-Newtonian flow, improved melt elasticity, melt strength, and heat resistance (e.g., heat distortion temperature under load) as compared to conventional prior art linear copolyester-carbonate resins.

The dihydric phenols useful in preparing the thermoplastic randomly branched copolyester-carbonate resins of the instant invention will in general conform to the general formula

I. 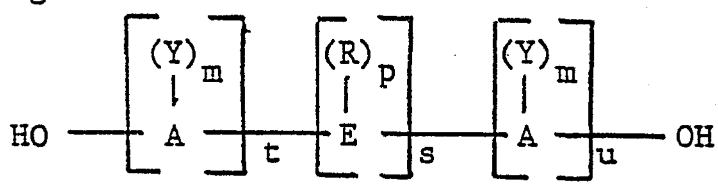

in which A is an aromatic group such as phenylene, biphenylene, naphthylene, anthrylene, etc. E may be an alkylene or alkylidene group such as methylene, ethylene, propylene, propylidene, butylene, butylidene, isobutylene, isobutylidene, amylene, isoamylene, amylidene, isoamylidene, etc. Where E is an alkylene or alkylidene group, it may also consist of two or more alkylene or alkylidene groups connected by a non-alkylene or non-alkylidene group such as an aromatic linkage, a tertiary amino linkage, a carbonyl linkage, a silicon-containing linkage, or by a sulfur containing linkage such as sulfide, sulfoxide, sulfone, etc. In addition E may be a cycloaliphatic group such as a cycloalkylene or cycloalkylidene group (e.g., cyclopentylene, cyclohexylene, cyclohexylidene, etc.); a sulfur-containing linkage such as a sulfide, sulfoxide or sulfone; an ether linkage; a carbonyl group;

a tertiary nitrogen group; or a silicon containing linkage such as silane or siloxy. R is hydrogen or a monovalent hydrocarbon group such as alkyl (e.g., methyl, propyl, isopropyl, butyl, isobutyl, tertiary butyl, etc.), aryl (e.g., phenyl, naphthyl, biphenyl, etc.), aralkyl or alkaryl (e.g., benzyl, tolyl, ethylphenyl, etc.), or cyclolaliphatic group such as a cycloalkyl (e.g., cyclopentyl, cyclohexyl, etc.). Y may be an inorganic atom such as chlorine, bromine, fluorine, etc.; an inorganic group such as the nitro group, etc.; a group such as R above; or an oxy group such as OR; it being only necessary that Y be inert to and unaffected by the reactants and reaction conditions. The letter m is any whole number from and including zero through the number of positions on A available for substitution; p is any whole number from and including zero through the number of positions on E available for susbstitution; t is a whole number equal to at least one; s is either zero or one; and u is any whole number including zero.

In the dihydric phenol compound represented by Formula I when more than one Y substituent is present they may be the same or different. The same is true for the R substituent. Where s is zero in Formula I and u is not zero, the aromatic rings are directly joined with no intervening alkylene or other bridge. The positions of the hydroxyl groups and Y on the aromatic nuclear residues A can be varied in the ortho, meta, or

para positions and the groupings can be in a vicinal, asymmetrical or symmetrical relationship where two or more ring carbon atoms of the aromatic hydrocarbon residue are substituted with Y and hydroxyl group.

Some illustrative non-limiting examples of dihydric phenols represented by Formula I include:
2,2-bis(4-hydroxyphenyl)propane (bisphenol-A);
2,4'-dihydroxydiphenylmethane;
bis(2-hydroxphenyl)methane;
bis(4-hydroxyphenyl)methane;
1,1-bis(4-hydroxyphenyl)ethane;
1,1-bis(4-hydroxy-2-chlorophenyl)ethane;
1,1-bis(2,5-dimethyl-4-hydroxyphenyl)ethane;
2,2-bis(2,5-dibromo-4-hydroxyphenyl)propane;
2,2-bis(2,5-dimethyl-4-hydroxyphenyl)propane;
2,2-bis(3-phenyl-4-hydroxyphenyl)propane;
1,1-bis(4-hydroxyphenyl)cyclohexane;
bis(4-hydroxyphenyl)cyclohexane;
bis(4-hydroxyphenyl)sulfone;
5'-chloro-2,4'-dihydroxydiphenyl sulfone; and the like.

Some other dihydric phenols falling within the scope of Formula I are disclosed in U.S. Patent No. 3,169,121, which is hereby incorporated herein by reference.

Preferred dihydric phenols, from the standpoint of the instant invention, are those represented by the general formula

II. 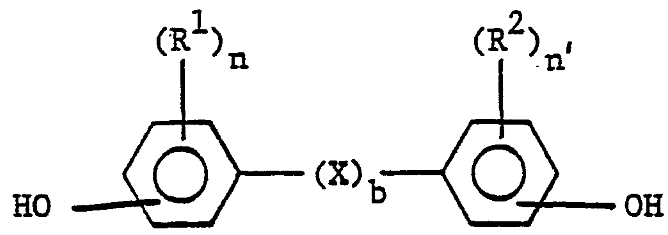

wherein:

$R^1$ is independently selected from halogen radicals, monovalent hydrocarbon radicals, and monovalent hydrocarbonoxy radicals;

$R^2$ is independently selected from halogen radicals, monovalent hydrocarbon radicals, and monovalent hydrocarbonoxy radicals;

X is selected from divalent hydrocarbon radicals,

$-S-$, $-S-S-$, $-O-$, $-\overset{O}{\overset{\|}{C}}-$. $-\overset{O}{\overset{\|}{S}}-$, and $-\overset{O}{\overset{\|}{\underset{\underset{O}{\|}}{S}}}-$;

n and n' are independently selected from whole numbers having a value of from 0 to 4 inclusive; and

b is either zero or one.

The monovalent hydrocarbon radicals represented by $R^1$ and $R^2$ are selected from alkyl radicals, aryl radicals, aralkyl radicals, alkaryl radicals, and cycloalkyl radicals.

The preferred alkyl radicals are those containing from 1 to about 8 carbon atoms. Illustrative of these

alkyl radicals are methyl, ethyl, propyl, isopropyl, butyl, isobutyl, tertiary butyl, pentyl, neopentyl, and the like. The preferred aryl radicals are those containing from 6 to 12 carbon atoms and include phenyl, naphthyl and biphenyl. The preferred aralkyl and alkaryl radicals are those containing from 7 to about 14 carbon atoms. Illustrative of these aralkyl and alkaryl radicals are benzyl, tolyl, ethylphenyl, and the like. The preferred cycloalkyl radicals are those containing from about 4 to about 7 ring carbon atoms and include cyclopentyl, cyclobutyl, cyclohexyl, methylcyclohexyl, and the like.

The preferred halogen radicals represented by $R^1$ and $R^2$ are chlorine and bromine.

The hydrocarbonoxy radicals represented by $R^1$ and $R^2$ are preferably the alkoxy and the aryloxy radicals, Preferred alkoxy radicals are those containing from 1 to about 8 carbon atoms. The preferred aryloxy radical is the phenoxy radical.

The divalent hydrocarbon radicals represented by X are selected from alkylene, alkylidene, cycloalkylene, and cycloalkylidene radicals.

The preferred alkylene radicals are those containing from 2 to about 8 carbon atoms. The preferred alkylidene radicals are those containing from 1 to about 8 carbon atoms. The preferred cycloalkylene and cycloalkylidene radicals are those containing from 4 to about 7 ring carbon atoms.

The preferred dihydric phenols of Formula II are those wherein b is one and X is selected from divalent hydrocarbon radicals.

In general, any difunctional carboxylic acid conventionally used in the preparation of linear polyesters may be utilized in the preparation of the copolyester-carbonates of the instant invention. In general, the difunctional carboxylic acids which may be used include the aliphatic carboxylic acids, the aliphatic-aromatic carboxylic acids, and the aromatic carboxylic acids. These acids are disclosed in the aforementioned U.S. Patent No. 3,169,121.

The carboxylic acids which may be utilized in the instant invention generally conform to the general formula

III. $$R^3 - (R^4)_q - COOH$$

wherein $R^4$ is an alkylene, alkylidene, or cycloaliphatic group; an alkylene, alkylidene or cycloaliphatic group containing ethylenic unsaturation; an aromatic group such as phenylene, naphthylene, biphenylene, substituted phenylene, and the like; two or more aromatic groups connected through non-aromatic linkages such as alkylene or alkylidene groups; or a divalent aralkyl radical such as tolylene, xylylene, and the like. $R^3$ is either a carboxyl group or a hydroxyl group. The letter q represents one where $R^3$ is a hydroxyl group and either zero or one where $R^3$ is a carboxyl group.

Preferred difunctional carboxylic acids are the aromatic difunctional carboxylic acids, i.e., those wherein q is one and $R^4$ represents a divalent aromatic moiety containing radical. The preferred aromatic carboxylic acids are those represented by the general formula

IV. 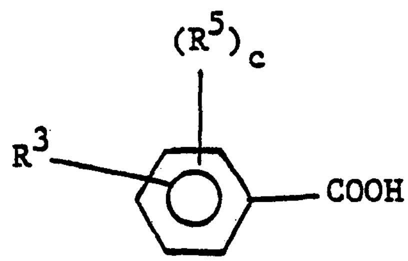

wherein:

$R^3$ is as defined supra;

$R^5$ is independently selected from halogen radicals, monovalent hydrocarbon radicals, and monovalent hydrocarbonoxy radicals; and

c is selected from whole numbers having a value of from 0 to 4 inclusive.

The preferred halogen radicals represented by $R^5$ are chlorine and bromine.

The monovalent radicals represented by $R^5$ are selected from alkyl radicals, aryl radicals, alkaryl radicals, aralkyl radicals, and cyclaolkyl radicals.

The preferred alkyl radicals are those containing from 1 to about 8 carbon atoms. The preferred aryl radicals are those containing from 6 to 12 carbon atoms. The preferred aralkyl and alkaryl radicals are those containing from 7 to about 14 carbon atoms. The preferred cycloalkyl radicals are those containing from 4 to about 7 ring carbon atoms.

Mixtures of two or more different difunctional carboxylic acids, as well as individual carboxylic acids, may be employed. Thus, where the term difunctional carboxylic acid appears herein it is meant to include mixtures of two or more different difunctional carboxylic acids as well as individual difunctional carboxylic acids.

Likewise, mixtures of two or more different dihydric phenols described supra, as well as individual dihydric phenols may be employed. Thus, where the term dihydric phenol is used herein it is meant to include mixtures of two or more different dihydric phenols as well as individual dihydric phenols.

Particularly useful difunctional carboxylic acids include isophthalic acid, terephthalic acid, and mixtures thereof. A particularly useful mixture of isophthalic acid and terephthalic acid is one which contains, in a weight ratio of isophthalic acid to terephthalic acid, from about 1:10 to about 10:1.

Rather than utilizing the difunctional carboxylic acid per se it is possible, and sometimes even preferred, to employ the reactive derivatives thereof. Illustrative of these reactive derivatives are the acid halides, Particularly useful acid halides are the acid chlorides. Thus, for example, rather than using isophthalic acid or terephthalic acid it is possible to use isophthaloyl dichloride or terephthaloyl

dichloride.

The carbonate precursor may be a carbonyl halide, a carbonate ester, or a haloformate. The carbonyl halides which may be employed herein are carbonyl chloride, carbonyl bromide, and mixtures thereof. Typical of the carbonate esters which may be employed herein are diphenyl carbonate, di(halophenyl)carbonates such as di(chlorophenyl)carbonate, di(bromophenyl) carbonate, di(trichlorophenyl)carbonate, di(tribromophenyl)carbonate, etc., di(alkylphenyl)carbonates such as di(tolyl)carbonate, etc., di(naphthyl)carbonate, di(chloronaphthyl)carbonate, phenyl tolyl carbonate, and the like, or mixtures thereof. The haloformates suitable for use herein include bis-haloformates of dihydric phenols (bis-chloroformates of hydroquinone), or glycols (bis-haloformates of ethylene glycol, neopentyl glycol, polyethylene glycol, etc.). The preferred carbonate precursor is carbonyl chloride, also known as phosgene.

The polyfunctional organic compounds that are coreacted with the dihydric phenols, difunctional carboxylic acids or their reactive derivatives, and the carbonate precursor to form the thermoplastic randomly branched copolyester-carbonate resins of the instant invention are well known compounds which are generally commercially available or may be readily prepared. These polyfunctional organic compounds function, in effect, as branching agents, thus forming the randomly branched copolyester-carbonates of the instant

invention. The presence of these branching agents is critical to the instant invention. Without these branching agents the resultant copolyester-carbonate is a conventional prior art generally linear copolyester-carbonate which is generally not suitable for use as a blow molding resin.

These branching agents or polyfunctional organic compounds are generally aromatic and contain at least three functional groups which may be hydroxyl, carboxyl, carboxylic anhydride, haloformyl, or mixtures thereof. Some illustrative non-limiting examples of these polyfunctional organic compounds include trimellitic anhydride, trimellitic acid, trimellityl trichloride, 4-chloroformyl phthalic anhydride, pyromellitic acid, pyromellitic dianhydride, mellitic acid, mellitic anhydride, trimesic acid, benzophenonetetracarboxylic acid, benzophenonetetracarboxylic anhydride, tetracarboxybutane anhydride, 4,4-bis(4'-hydroxyphenyl)pentanoic acid, 4,6-dimethyl-2,4,6-tri-(4-hydroxyphenyl)heptane, 1,3,5-tri-(4-hydroxyphenyl)benzene, and the like.

These polyfunctional aromatic compounds, including those mentioned above, are disclosed, inter alia, in U.S. Patent Nos. 3,525,712; 3,541,049; 3,544,514; 3,635,895; 3,816,373; 4,001,184; 4,204,047 and 4,294,953, all of which are hereby incorporated herein by reference.

In the preparation of the novel thermoplastic randomly branched copolyester-carbonate resins of this invention, the amount of the polyfunctional aromatic compound which is reacted with the dihydric phenol, the carbonate precursor, and the difunctional carboxylic acid or a reactive derivative thereof is critical to the extent that the amount employed must be sufficient to result in a thermoplastic randomly branched copolyester-carbonate resin which is substantially free of crosslinking and which is suitable for use as a blow molding grade resin. Thus, the amount of said polyfunctional aromatic compound which is employed is an amount effective to produce a thermoplastic randomly branched copolyester-carbonate resin. Generally this amount is in the range of from about 0.01 to about 5 mole percent, and preferably from about 0.05 to about 2 mole percent, based on the amount of dihydric phenol employed. Generally, if an amount of the polyfunctional aromatic compound employed is less than about 0.01 mole percent, based upon the moles of the dihydric phenol employed, the resulting polymer will not exhibit the degree of properties, such as, for example, non-Newtonian melt flow, melt strength, and the like, desired for blow molding and/or melt extrusion purposes.

The preparation of the branched copolyester-carbonates of the instant invention may be carried out by the processes used to produce the conventional

straight chain copolyester-carbonates. These methods are well known in the art. Some of these methods, for example, are disclosed in the aforementioned U.S. Patent No. 3,169,121.

Thus, for example, the preparation of the instant branched copolyester-carbonates may be accomplished by heterogeneous interfacial polymerization, solution condensation polymerization, melt condensation polymerization, and the like.

The instant copolyester-carbonates may conveniently be prepared from (i) a carbonate precursor, (ii) at least one dihydric phenol, (iii) at least one difunctional carboxylic acid or a reactive derivative thereof, and (iv) at least one polyfunctional aromatic compound by the interfacial polymerization technique. In accordance with the usual interfacial polymerization procedure the reactants ~~are~~ present in different liquid phases which are immiscible and which, in the preparation of the present polymers, constitute two solvent media. Thus, for example, the dihydric phenol is dissolved in one solvent medium, the aromatic dicarboxylic acid or its reactive derivative such as the acid dichloride is dissolved in a second solvent medium immiscible with the first, and the solutions are combined. Normally, an alkaline aqueous medium serves as the solvent for the dihydric phenol, and an organic solvent is utilized for the acid , said organic solvent being so chosen that it either dissolves the copolyesters produced or serves as a swelling medium. Also

present during the reaction are catalysts and chain stoppers or molecular weight regulators. One particularly useful interfacial polymerization technique utilizes methylene chloride as the organic solvent, water as the aqueous medium, and phosgene as the carbonate precursor. In this system the dihydric phenol, difunctional carboxylic acid, water, methylene chloride and the polyfunctional aromatic compound are mixed together and phosgene is introduced into the reaction mixture, said reaction mixture being kept at the desired controlled pH by the addition of an aqueous caustic solution.

The catalysts which can be employed are any of the well known catalysts that aid the interfacial polymerization reaction in the formation of the copolyester-carbonates. Suitable catalysts include, but are not limited to, tertiary amines such as triethylamine, tripropyl amine, N.N-dimethylaniline and the like; quaternary ammounium compounds such as tetraethylammonium chloride, cetyl triethyl ammonium bromide, tetra-n-heptylammonium iodide, benzyltri-ammonium chloride, and the like; and quaternary phosphonium compounds such as n-butyl triphenyl phosphonium bromide, tetrabutyl phosphonium chloride, and the like.

The molecular weight regulators which may be employed include monohydric phenols such as phenol, chroman-I [4-(2,4,4-trimethychromanyl)phenol], p-t-butyl phenol, p-cumyl phenol, and the like.

The temperature at which the polymerization reaction proceeds may vary from below 0°C to above 100°C. The reaction proceeds satisfactorily at temperatures from room temperature (25°C) to about 50°C.

The copolyester-carbonates of the instant invention may optionally have admixed therewith the commonly known and used additives such as antioxidants; antistatic agents; mold release agents; fillers such as glass fibers, talc, mica, clay, and the like; ultraviolet radiation absorbers such as the benzophenones and the benzotriazoles; hydrolytic stabilizers such as the epoxides disclosed in U.S. Patent Nos. 3,489,716; 4,138,379 and 3,839, 247, all of which are hereby incorporated by reference; flame retardants; and the like.

Some particularly useful flame retardants are the alkali and alkaline earth metal salts of sulfonic acids. These types of flame retardants are disclosed in U.S. Patent Nos. 3,933,734; 3,948,851; 3,926,908; 3,919, 167; 3,909,490; 3,953,396; 3,931, 100; 3,978,024; 3,953,399; 3,917,559; 3,951,910 and 3,940,366, all of which are hereby incorporated by reference.

## DESCRIPTION OF THE PREFERRED EMBODIMENT

The following examples are set forth to further illustrate the present invention and are not to be

considered as limiting the invention thereto. Unless otherwise specified, where parts or percents are mentioned, they are parts or percents by weight.

The following examples illustrate the preparation of conventional prior art linear copolyester-carbonate resins falling outside the scope of the instant invention. They are included herein for comparative purposes only.

EXAMPLE 1

To a ten gallon reactor vessel were added 1710 grams (7.5 moles) of bisphenol-A, 6 liters of methylene chloride, 5.5 liters of water, 32 grams of phenol, 25 milliliters of triethylamine, and 3.4 grams of sodium gluconate. The mixture was agitated and over a 12 minute period 507.2 grams (2.5 moles) of isophthaloyl dichloride in 1 liter of methylene chloride was added while maintaining the pH of the reaction mixture between 9.5 to 11. Phosgene was bubbled into the reaction mixture at a rate of 36 grams per minute for 18 minutes for a total of 648 grams (6.5 moles) of phosgene while maintaining the pH between 9.5 to 11. The pH was controlled throughout the polymerization using 35% aqueous caustic (NaOH). Approximately 6 liters of additional methylene chloride was added and the brine phase separated. The organic phase was washed with water, a dilute hydrochloric acid solution, followed by three additional water washings. A white fluffy polymer powder was recovered by precipitation of the methylene chloride polymer solution using 125-150 psi steam. The white powder was dried using a nitrogen purged fluid bed drier at a temperature of 140°C. This resin product is then fed into an extruder operating at a temperature of about 600°F to extrude the resin into strands and the strands are chopped into pellets. The pellets are injection molded at about about 620-650°F into test samples measuring about 2 1/2" x 1/2" x 1/8".

EXAMPLE 2

To a ten gallon reactor vessel were added 1907 grams (8.36 moles) of bisphenol-A, 10 liters of methylene chloride, 6 liters of water, 24 milliliters of triethylamine, 125 grams of Chroman I, and 3.4 grams of sodium gluconate. The mixture was agitated and over a 20 minute period a mixture of isophthaloyl dichloride and terephthaloyl dichloride (15/85 weight ratio), 1090 grams (5.37 moles) in 2 liters of methylene chloride, was added while maintaining the pH of the reaction mixture between 9.5 to 11. Phosgene was bubbled into the reaction mixture at a rate of 36 grams per minute for a little over 10 minutes for a total of 371 grams (3.75 moles) while maintaining the pH between 9.5 to 11. The pH was controlled throughout the polymerization using 35% aqueous caustic (NaOH). Approximately 6 liters of additional methylene chloride was added and the brine phase separated. The organic phase was washed with water, a dilute hydrochloric acid

solution followed by three additional washings with water. A white fluffy polymer powder was recovered by precipitation of the methylene chloride solution using 125-150 psi steam. The white powder was dried using a nitrogen purged fluid bed drier at a temperature of 140°C. This resin product was then fed into an extruder operating at about 600°F to extrude the resin into pellets. The pellets were injection molded at about 620-650°C into test samples measuring about 2 1/2" x 1/2" x 1/8".

The following examples illustrate the preparation of the thermoplastic randomly branched copolyester-carbonates of the instant invention.

EXAMPLE 3

The procedure of Example 1 is substantially repeated except that after completion of the addition of the isophthaloyl dichloride solution and before the addition of the phosgene, 12 grams of trimellityl trichloride were added to the reaction mixture and the ph was adjusted to between 9.5 to 11.

The test samples of this resin were prepared substantially in accordance with the procedure of Example 1.

EXAMPLE 4

The procedure of Example 2 was substantially repeated except that that 10 grams of trimellityl trichloride was added to the mixture of isophthaloyl

dichloride and terephthaloyl dichloride and the resulting solution was added to the reaction mixture over a 20 minute period.

The test samples of this resin were prepared substantially in accordance with the procedure of Example 2.

Various physical properties of the resins of Examples 1-4 were determined as follows:

The Heat Distortion Temperature Under Load (at 264 psi) of the molded samples was determined according to ASTM D-648, this is reported in Table I as DTUL;

Modified melt flow (KI) values, expressed in centiseconds, were obtained by an automated ASTM D-1238 procedure at 300°C on a Tinius Olsen Melt Indexer, Model T-3, Condition 0;

Melt Index Ratio (MIR), which provides the ratio of melt flow rates at two different shear levels and is a measure of the non-Newtonian property of the polymer, was obtained on a Tinius Olsen Melt Indexer described above (for Examples 1 and 3 the Melt Index Ratio was run at 300°C; for Example 2 and 4, the resins produced in these examples having a much higher melt viscosity, the Melt Index Ratio was run 25°C higher, i.e., at 325°C). The MIR values of linear Newtonian copolyester-carbonates are typically less than 1.4.

Notched Izod impact test carried out on the test samples in accordance with ASTM D-256.

The results of these tests is set forth in Table I below.

TABLE I

| Example No. | DTUL at 264 psi | 1/8 inch Notched Izod | KI | MIR |
|---|---|---|---|---|
| 1 | 288°F | 12.1 | 5,320 | 1.2 |
| 2 | 325°F | 5.7 | 43,420 | 1.3 |
| 3 | 290°F | 10.1 | 18,920 | 2.4 |
| 4 | 331°F | 5.0 | 102,500 | 1.7 |

The data in Table I clearly illustrates that the branched copolyester-carbonates of the instant invention (Examples 3 and 4) exhibit improved heat distortion temperatures and have non-Newtonian flow characteristics than do their equivalent linear copolyester-carbonate resins (Examples 1 and 2 respectively).

Obviously, other modifications and variations of the present invention are possible in light of the above teachings. It is, therefore, to be understood that changes may be made in the particular embodiment of the invention described and claimed which are within the full intended scope of the invention as defined by the appended claims.

WHAT IS CLAIMED IS:

1. Randomly branched thermoplastic copolyester-carbonate resin compositions exhibiting blow molding properties derived from:

(i) a carbonate precursor;

(ii) at least one dihydric phenol;

(iii) at least one difunctional carboxylic acid or a reactive derivative thereof; and

(iv) a polyfunctional organic branching agent.

2. The compositions of claim 1 wherein the polyfunctional organic branching agent is present in an amount effective to produce a randomly branched copolyester-carbonate resin.

3. The compositions of claim 2 wherein said amount is in the range of from about 0.01 to about 5 mole percent, based on the amount of dihydric phenol present.

4. The compositions of claim 3 wherein said amount is in the range of from about 0.05 to about 2 mole percent.

5. The compositions of claim 4 wherein said polyfunctional organic branching agent contains at least three functional groups selected from hydroxyl,

carboxyl, carboxylic anhydride, haloformyl, and mixtures thereof.

6. The compositions of claim 4 wherein said dihydric phenol is bisphenol-A.

7. The compositions of claim 6 wherein said carbonate precursor is phosgene.

8. The compositions of claim 7 wherein said reactive derivative of said difunctional carboxylic acid is selected from isophthaloyl dichloride, terephthaloyl dichloride, and mixtures teherof.

9. The compositions of claim 8 wherein said polyfunctional organic branching agent is trimelittyl trichloride.

10. A process for preparing thermoplastic randomly branched copolyester-carbonate resin compositions exhibiting blow molding properties which process comprises reacting (i) a carbonate precursor, (ii) at least one dihydric phenol, (iii) at least one difunctional carboxylic acid or a reactive derivative thereof, and (iv) a polyfunctional organic branching agent.

11. The process of claim 10 wherein said polyfunctional organic branching agent is present in an amount effective to produce a randomly branched thermoplastic copolyester-carbonate resin.

12. The process of claim 11 wherein said amount is in the range of from about 0.01 to about 5 mole percent, based on the amount of dihydric phenol employed.

13. The process of claim 11 wherein said amount is in the range of from about 0.05 to about 2 mole percent.

14. The process of claim 13 wherein said polyfunctional organic brancing agent contains at least three functional groups selected from hydroxyl, carboxyl, carboxylic anhydride, haloformyl, and mixtures thereof.

15. The process of claim 13 wherein said dihydric phenol is bisphenol-A.

16. The process of claim 15 wherein said carbonate precursor is phosgene.

17. The process of claim 16 wherein said reactive derivative of the difunctional carboxylic acid is selected from isophthaloyl dichloride, terephthaloyl dichloride, and mixtures thereof.

18. The process of claim 17 wherein said polyfunctional organic branching agent is trimellityl trichloride.

European Patent Office

**0111849**

Application number

# EUROPEAN SEARCH REPORT

EP 83 11 2402

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-A-2 626 776 (MITSUBISHI) *Claims 1-7* | 1-18 | C 08 G 63/64 |
| | --- | | |
| D,X | GB-A-1 159 924 (GENERAL ELECTRIC) *Claims 1-15* | 1-18 | |
| | ----- | | |

TECHNICAL FIELDS SEARCHED (Int. Cl. 3)

C 08 G

The present search report has been drawn up for all claims

| Place of search | Date of completion of the search | Examiner |
|---|---|---|
| THE HAGUE | 23-03-1984 | DECOCKER L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document